# EUROPÄISCHE PATENTSCHRIFT

(11) **EP 1 761 699 B1**
(45) Veröffentlichungstag und Bekanntmachung des Hinweises auf die Patenterteilung: **01.07.2009**
(21) Anmeldenummer: 05749708.3
(22) Anmeldetag: 04.05.2005
(51) Int. Cl.: F02G 5/04, F02B 41/00

(54) **VERFAHREN ZUR ERHÖHUNG DES WIRKUNGSGRADES EINES VIER-TAKT-VERBRENNUNGSMOTORS SOWIE VIER-TAKTVERBRENNUNGSMOTOR**
METHOD FOR INCREASING THE EFFICIENCY OF A FOUR-STROKE INTERNAL COMBUSTION ENGINE AND FOUR-STROKE INTERNAL COMBUSTION ENGINE
PROCEDE POUR AUGMENTER LE RENDEMENT D'UN MOTEUR A COMBUSTION INTERNE QUATRE TEMPS ET MOTEUR A COMBUSTION INTERNE QUATRE TEMPS

(30) Priorität: 04.05.2004 EP 04010526
(43) Veröffentlichungstag der Anmeldung: 14.03.2007
(73) Patentinhaber: Neue Energie-Verwertungsgesellschaft mbH, 18276 Klein Upahl (DE)
(72) Erfinder: HANSEN, Uwe, 25767 Albersdorf (DE)
(74) Vertreter: von Eichel-Streiber, Caspar
(86) Internationale Anmeldenummer: PCT/EP2005/004864
(87) Internationale Veröffentlichungsnummer: WO 2005/106233

(56) Entgegenhaltungen:
- GB-A- 2 205 900
- US-A- 4 901 531
- US-A- 5 261 238
- US-A- 5 896 746

## Beschreibung

Die Erfindung betrifft ein Verfahren zur Erhöhung des Wirkungsgrades eines Vier-Takt-Verbrennungsmotors nach dem Oberbegriff des Anspruchs 1 sowie einen Vier-Takt-Verbrennungsmotor nach dem Oberbegriff des Anspruchs 5.

Es ist bekannt, dass durch die Verbrennung von Kohlenwasserstoff flüssiger oder gasförmiger Form oder reinem Wasserstoff eine Temperatur von über 2000°C erzeugt wird. Der entstehende Gasdruck treibt die Motoren, z.B. Ottomotoren, Dieselmotoren, Wankelmotoren an. Hierbei entstehen Wärmeverluste bis zu 75%. Entsprechendes lässt sich finden in Das blaue Buch von Aral, Teil 1, Der Motor, Seite 50 bis 51 bzw. in anderen Fachzeitschriften über Motoren.

In der US-Patentschrift 4,901,531 ist ein Dieselmotor beschrieben, bei dem von ursprünglich sechs Verbrennungszylindern ein Zylinder aus der Verbrennung ausgenommen und stattdessen als Expansionsraum für einen Rankine-Prozess verwendet wird. Dieser Rankine-Prozess wird gemäß dieser Offenbarung aus der Abwärme der Verbrennungszylinder gespeist. Das hier offenbarte Verfahren sowie der hier offenbarte Motor haben nach Wissen des Erfinders aufgrund technischer Schwierigkeiten niemals eine praktische Anwendung gefunden. Auch ist der Anteil der zur weiteren mechanischen Nutzung rückgewonnenen Abwärme vergleichsweise gering.

Ein Verfahren, welches grundsätzlich nach den Merkmalen des Oberbegriffs des Anspruchs 1 arbeitet, wird auch in der US 5,261,238 offenbart. Dort werden die zusätzlich zu herkömmlichen Verbrennungszylinder vorhandenen Zylinder mit Wasserdampf betrieben.

Weitere vergleichbare Verfahren werden in der US 5,869,746 und der GB 2 205 900 offenbart.

Aufgabe der Erfindung ist es, die Abwärme eines Vier-Takt-Verbrennungsmotors zur weiteren Gewinnung nutzbarer, mechanischer Energie zu nutzen und die Wärmeverluste noch weiter zu vermindern.

Diese Aufgabe wird erfindungsgemäß gelöst durch ein Verfahren mit den Merkmalen des Anspruches 1 bzw. durch einen Viertaktverbrennungsmotor mit den Merkmalen des Anspruches 5.

Vorteilhafte Weiterbildungen des Verfahrens sind in den abhängigen Ansprüchen 2 bis 4, solche des Motors in den abhängigen Ansprüchen 6 bis 9 angegeben.

Dem Verbrennungsmotor wird also zumindest ein Zylinder zugeordnet, in welchem nicht etwa eine Verbrennung stattfindet, sondern welcher nach Art einer "Dampfmaschine" mit einem Expansionsmittel beaufschlagt wird. Dieses Expansionsmittel wird durch Erwärmen unter Druck gesetzt, wobei zum Erwärmen des Expansionsmittels die Abgase der Verbrennungsräume des Motors verwendet werden. Dabei wird eine wesentliche Steigerung der Leistung und der Effizienz des Motors dadurch erreicht, dass der mit dem Expansionsmittel zu beaufschlagende Zylinder jedes Mal dann mit dem Expansionsmittel beaufschlagt wird, wenn sich der Kolben in einer obersten Stellung befindet (OT). Damit leistet dieser Zylinder anders als normale Vier-Takt-Verbrennungszylinder nicht nur bei jedem vierten Takt einen Arbeitstakt, sondern bei jedem zweiten. Man gewinnt in der Summe also mit jedem mit dem Expansionsmittel zu beaufschlagenden Zylinder einen zusätzlichen Arbeitstakt, was insgesamt zu einer Leistungssteigerung des Motors bzw. einer Kraftstoffeinsparung führt. Dies ist auch aus Umweltgesichtspunkten zu begrüßen. Als Expansionsmittel wird erfindungsgemäß ein unter hohem Druck stehendes, verflüssigtes Gas verwendet. Als ein mögliches und geeignetes entsprechendes Gas hat sich n-Butan erwiesen, welches vorzugsweise unter einem Druck von 20 bis 30 bar verwendet wird (Anspruch 2).

Grundsätzlich können bei einem erfindungsgemäß gestalteten Motor ein, aber auch mehrere Zylinder in der erfindungsgemäßen Weise mit einem Expansionsmittel zu beaufschlagen sein.

In vorteilhafter Weise wird das Expansionsmittel in einem Kreislauf geführt, in welchem es nach dem Verlassen des Zylinders gekühlt wird. Durch diese Ausgestaltung der Erfindung ist es nicht erforderlich, permanent Expansionsmittel zuzuführen, dieses kann ähnlich wie beispielsweise ein Kühlmittel bei einem normalen Motor in einem Vorratsbehälter bevorratet und in dem erwähnten Kreislauf geführt werden.

Eine besonders hohe Effizienzsteigerung des Motors ergibt sich, wenn man sowohl Abwärme aus einem Kühlmittelkreislauf als auch Abwärme der heißen Abgase der Verbrennungsräume nutzt, um das Expansionsmittel zu erhitzen.

Um den bzw. die neben den herkömmlichen mit Verbrennungsräumen ausgestatteten Zylinder vorzusehenden zusätzlichen Zylinder, welche(r) mit dem Expansionsmittel zu beaufschlagen ist/sind, entsprechend anzusteuern, wird vorzugsweise eine geänderte Nockenwelle verwendet. Diese weist im Bereich des/der mit dem Expansionsmittel zu beaufschlagenden Zylinder(s) zusätzlich Nocken auf, so dass Einlass bzw. Auslassventil dieses Zylinders mit doppelter

Frequenz geöffnet werden, um so den zusätzlichen Arbeitstakt zu erreichen.

Nachfolgend wird das erfindungsgemäße Prinzip zunächst dargestellt an einem Vierzylinder-Vier-Takt-Ottomotor:

Der vierte Zylinder wird vom Ansaug- und Abgaskanal getrennt, sodass ein Dreizylinder-Ottomotor mit herkömmlicher Technik verbleibt.

Der gesamte Kühlwasserkreislauf mit Kühler und Wasserpumpe wird entfernt. Die Nockenwelle bekommt im Bereich des vierten Zylinders vier neue aber kleinere Nocken. Der vierte Kolben wird mit neuen, spaltlosen aus Kunststoff bestehenden Kolbenringen bestückt. Dieses ist möglich und notwendig, da in diesem Zylinder keine Verbrennung stattfindet. Der Verdichtungsraum des vierten Zylinders wird entfernt, da keine Verdichtung mehr stattfindet. Die Ventilschächte des vierten Zylinders werden mit einer Dichtung versehen.

Dem Expansionsmittel wird Silikonöl beigegeben, damit die Spezialdichtungen des Kolbens und der Ventile in dem für mit dem Expansionsmittel zu beaufschlagenden Zylinder nicht trocken laufen.

Der Auspuffkrümmer des ersten, zweiten und dritten Zylinders wird mit einem Wärmetauscher versehen.

Die Abgasanlage wird durch eine stark vereinfachte Anlage ersetzt, da das Abgas vom Wärmetauscher bis auf < 100°C abgekühlt wird.

### Wirkungsweise:

Hier dargestellt an einem Vierzylinder-Vier-Taktmotor.

Der Motor mit den verbliebenen drei Zylindern wird normal gestartet, die entstehende Wärme im Motorgehäuse und im Zylinderkopf wird durch Zuführung eines Flüssiggases durch einen geschlossenen Kreislauf auf die gewünschte Temperatur mittels eines Thermostaten von etwa 100°C gehalten, wobei ein Gasdruck von 20 bis 30 bar erreicht wird, welcher in einen kleinen Druckbehälter geleitet wird. Dieser Druckbehälter ist mit dem Abgaskanal im Zylinderkopf des vierten Zylinders verbunden. Hier wird bei OT des vierten Zylinders das Ventil über die geänderte Nockenwelle geöffnet und der Kolben mit einem Druck von 20 bis 30 bar beaufschlagt. Bei UT öffnet das andere Ventil und das Gas wird durch den Kolben ausgestoßen und einem Kühler zugeführt, wo es sich verflüssigt. Eine Pumpe fördert das Flüssiggas durch druck- und/oder thermisch gesteuerte Ventile an den bzw. die Wärmetauscher. Das Flüssiggas wird in dem oben beschriebenen Wärmetauscher im Abgaskrümmer weiter erwärmt. Das hierbei entstehende Druckgas wird dann dem vierten Zylinder zugeführt.

Ein Überdruckventil am Druckbehälter ist mit dem Kühlkreislauf verbunden. Da der Ansaug- und Verdichtungstakt im vierten Zylinder entfällt, wird bei jedem OT des Kolbens ein Arbeitstakt hergestellt, das hat zur Folge, dass dieser Vierzylindermotor fünf Arbeitstakte erzeugt. Da der vierte Zylinder kein Kraftstoff benötigt, ergibt sich eine Kraftstoffeinsparung von 25 %.

Der durch diese Erfindung zusätzlich erzeugte Arbeitstakt im vierten Zylinder hat eine Leistungssteigerung zur Folge.

Die mit der Erfindung erzielten Vorteile bestehen darin:
1. dass der Kraftstoffverbrauch etwa halbiert wird bei erhöhter Leistung;
2. dass grundsätzlich keine neuen Motoren entwickelt werden müssen, sondern auf die weltweit vorhandene Motortechnik erfindungsgemäß aufgebaut werden kann;
3. dass nicht nur Vierzylinder-Motoren, sondern alle Motoren bis zum Zwölfzylinder-Motor entsprechend abgewandelt werden können, wobei dann mehrere Zylinder erfindungsgemäß umgebaut werden können;
4. dass die mit einem Motor gemäß dieser Erfindung versehenen Fahrzeuge durch eine leichtere Abgasanlage weniger Gewicht, auf die Waage bringen;
5. dass grundsätzlich alle Gebrauchtfahrzeuge umgerüstet werden können;
6. dass jegliche Wärme ab 80°C aufwärts in mechanische Nutzenergie umgewandelt werden kann;
7. dass grundsätzlich keine jahrelange Entwicklung notwendig ist sondern mit dem vorhandenen technischen Wissen eine sofortige Umsetzung erfolgen kann.

Eine vorteilhafte Ausgestaltung der Erfindung sieht vor, dass zum Erwärmen des Flüssiggases auch ein in den "normalen" Kühlkreislauf des Motors integrierter Wärmetauscher verwendet wird. Diese Weiterbildung ermöglicht es, den Kühlwasserkreislauf unangetastet zu lassen und nur den Kühler durch einen Wärmetauscher zu ersetzen. Die normalerweise über den Kühler an die Umgebungsluft abgegebene Wärme kann so in nutzbare Energie umgewandelt werden.

Nachfolgend wird das erfindungsgemäße Prinzip noch einmal anhand eines entsprechend aufgebauten Sechszylinder-Motors unter Verweis auf die einzig beigefügte Figur erläutert.

Dabei zeigt:

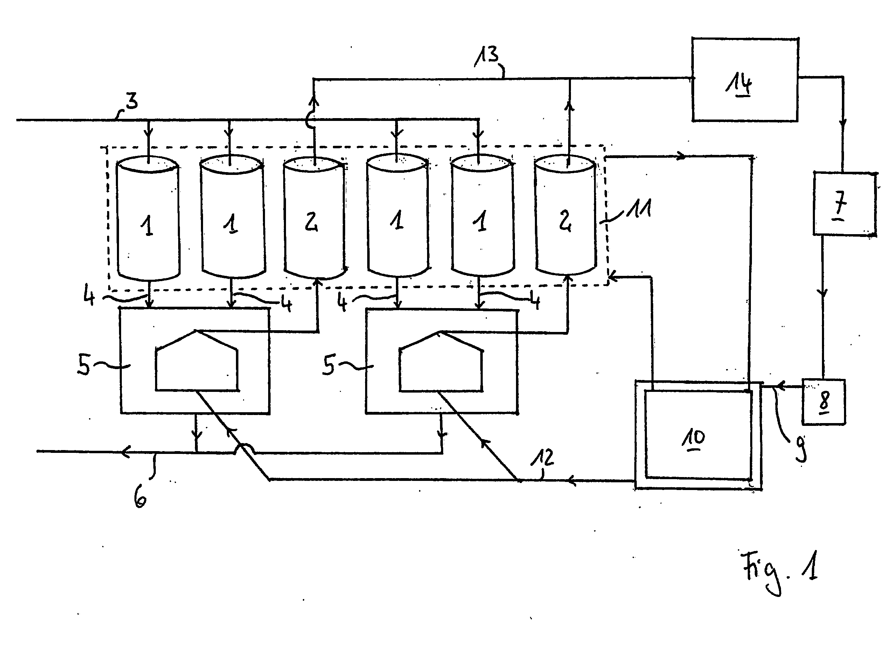

- Fig. 1: schematisch den Aufbau eines erfindungsgemäße Vier- Takt-Verbrennungsmotors mit 6 Zylindern, von denen zwei als mit dem Expansionsmittel zu beaufschlagende Expansionszylinder gestaltet sind.

Nachfolgend wird das Prinzip der Erfindung noch einmal anhand der Figur 1 erläutert. In dieser Figur ist schematisch ein erfindungsgemäß aufgebauter Vier-Takt-Sechszylindermotor dargestellt. Dabei sind vier der insgesamt sechs Zylinder als normale Verbrennungsräume ausgebildet. Dies sind die mit 1 bezifferten Zylinder. Zwei weitere Zylinder 2 sind aus dem Verbrennungsprozess ausgenommen und werden nach Art einer "Dampfmaschine" mit einem Expansionsmittel angetrieben. Alle sechs Zylinder wirken in bekannter Weise auf einer gemeinsamen Kurbelwelle, um mechanische Energie auf einen Antrieb zu übertragen.

Mit 3 ist eine Kraftstoffleitung bezeichnet, über welche den regulären Verbrennungszylindern 1 Kraftstoff zugeführt wird. Die aufgrund der Verbrennung entstehenden heißen Abgase verlassen die Zylinder 1 über Abgasleitungen 4. Die Abgasleitungen werden durch in diesem Beispiel insgesamt zwei mit 5 schematisch angedeutete Wärmetauscher geführt. Dort werden die heißen Verbrennungsabgase abgekühlt bis auf Temperaturen von unter 100°C. Die so abgekühlten Abgase werden über eine Leitung 6 einer weiteren Abgasbehandlung zugeführt, die hier nicht näher dargestellt ist. Die aus der Verbrennung ausgenommenen Zylinder 2 werden mit einem Expansionsmittel betrieben. Hierzu ist ein Expänsionsmittelreservoir 7 mit einer Menge des Expansionsmittels gefüllt. Aus dem Reservoir gelangt das Expansionsmittel in eine Hochdruckpumpe 8, die das Expansionsmittel auf einen gewünschten Druck vorverdichtet. Wird n-Butan als Expansionsmittel gewählt, wird dieses auf einen Druck von ca. 10 bis ca. 40 bar vorverdichtet. Die Hochdruckpumpe 8 wird vorzugsweise mit von dem Motor erzeugter mechanische Energie angetrieben. Aus der Hochdruckpumpe 8 wird das vorverdichtete Expansionsmittel über eine Leitung 9 einem Wärmetauscher 10 zugeführt. Dieser Wärmetauscher 10 ist mit einem Kühlmittelkreislauf 11 verbunden, welcher zum Kühlen der Verbrennungszylinder 1 eingesetzt ist. In diesem Wärmetauscher 10 wird das mittels der Hochdruckpumpe 8 vorverdichtete Expansionsmittel vorerwärmt, wobei von den Verbrennungszylindern 1 an das Kühlmittel übertragene Wärmeenergie rückgewonnen und in später zu erläuternder Weise zur Gewinnung weiterer mechanischer Energie eingesetzt wird. Das so vorerwärmte Expansionsmittel verlässt den Wärmetauscher 10 über eine Leitung 12 und wird den oben bereits genannten Wärmetauschern 5 zugeführt. Dort dient das Expansionsmittel dem Abkühlen der die Verbrennungszylinder 1 über die Abgasleitungen 4 verlassenden Verbrennungsabgase. Dabei wird das Expansionsmittel weiter erwärmt und auf diese Weise unter zusätzlichen Druck gesetzt. Das so unter Druck stehende Expansionsmittel wird dann zu einem Zeitpunkt OT jeweils in den Zylinder 2 eingebracht. Dort entspannt sich das Expansionsmittel und treibt den Kolben dieser Zylinder an, um so weitere mechanische Arbeit zu verrichten. Die Kolben der Zylinder 2 werden dabei bei jedem OT mit dem unter Druck stehenden Expansionsmittel beaufschlagt, so dass sie bei jedem zweiten Takt einen Arbeitstakt leisten. Nach erfolgter Expansion wird das Expansionsmittel in die Leitung 13 ausgestoßen. In dieser Leitung wird das Expansionsmittel einem Kühler 14 zugeführt, in welchem es weiter abgekühlt wird, bis zu einer Temperatur, in der es wieder in das Reservoir 7 gegeben werden kann. Dort beginnt der Kreislauf von neuem.

Der Motor wird über Thermostate vorzugsweise derart gesteuert, dass die in der Leitung 6 geführten Abgase eine Temperatur von 100°C oder weniger aufweisen. Auf diese Weise wird ein maximaler Anteil der Abwärme der Verbrennungszylinder 1 genutzt, um in den zusätzlichen Zylindern 2 weitere mechanische Arbeit zu verrichten.

Die zusätzlichen Zylinder 2 können durch Umbau eines herkömmlichen Sechszylinderverbrennungsmotors entstanden sein, indem zwei der ursprünglich sechs Verbrennungszylinder von der Verbrennung ausgenommen und für eine Beaufschlagung mit dem Expansionsmittel umgerüstet worden sind, sie können aber auch einem herkömmlichen Vier-Zylinder-Motor hingefügt worden sein.

### Bezugszeichenliste

- 1: Zylinder
- 2: Zylinder
- 3: Kraftstöffleitung
- 4: Abgasleitung
- 5: Wärmetauscher
- 6: Abgasleitung
- 7: Reservoir
- 8: Hochdruckpumpe
- 9: Leitung
- 10: Wärmetauscher
- 11: Kühlmittelkreislauf
- 12: Leitung
- 13: Leitung
- 14: Kühler

## Patentansprüche

1. Verfahren zur Erhöhung des Wirkungsgrades eines Vier-Takt-Verbrennungsmotors, wobei die beim Verbrennen des Treibstoffes in den Verbrennungsräumen entstehende Abwärme ausgenutzt wird, um ein Expansionsmittel zu erwärmen und **dadurch** zur Expansion zu bringen, wobei die Expansion des Expansionsmittels in wenigstens einen mit einem Kolben versehenen Zylinder hinein geleitet und die durch die Expansion erfolgende Bewegung des Kolbens in dem Zylinder als zusätzliche Motorantriebskraft verwendet wird, wobei in den mit dem Expansionsmittel beaufschlagten Zylinder bei jedem zweiten Takt (OT) das Expansionsmittel eingeleitet wird, **dadurch gekennzeichnet, dass** als Expansionsmittel ein unter hohem Druck stehendes, verflüssigtes Gas verwendet wird.

2. Verfahren nach Anspruch 1, **dadurch gekennzeichnet, dass** n-Butan unter einem Druck von 20 bis 30 bar verwendet wird.

3. Verfahren nach einem der Ansprüche 1 oder 2, **dadurch gekennzeichnet, dass** als Expansionsmittel in einem Kreislauf geführt wird, in welchem es nach Verlassen des Zylinders gekühlt wird.

4. Verfahren nach einem der vorhergehenden Ansprüche, **dadurch gekennzeichnet, dass** der Übertrag der Abwärme auf das Expansionsmittel wenigstens zweistufig erfolgt, wobei das Expansionsmittel in einer ersten Stufe durch ein die Verbrennungsräume kühlendes Kühlmittel vorerwärmt und in einer zweiten Stufe durch die heißen, die Verbrennungsräume verlassenden Abgase weiter erwärmt wird.

5. Vier-Takt-Verbrennungsmotor mit in Zylindern angeordneten, herkömmlichen Verbrennungsräumen (1) sowie wenigstens einem zusätzlichen mit einem über wenigstens einen Wärmetauscher (5, 10) mit der Abwärme der in den herkömmlichen Verbrennungsräumen (1) stattfindenden Verbrennung in Kontakt stehenden Expansionsmittel beaufschlagbaren, mit einem Kolben versehenen Zylinder (2), dessen Kolbenbewegung auf eine gemeinsame Motorausgangswelle (Kurbelwelle) wirkt, wobei der Vier-Takt-Verbrennungsmotor eine Ansteuerung aufweist, die dazu eingerichtet ist, jedes Mal, wenn sich der Kolben in dem Zylinder (2) in einer oberen Position befindet, Expansionsmittel in den Zylinder (2) einzulassen, **dadurch gekennzeichnet, dass** er einen Expansionsmittelkreislauf mit einem darin befindlichen unter hohem Druck stehenden, verflüssigten Gas aufweist.

6. Motor nach Anspruch 5, **dadurch gekennzeichnet, dass** in dem Expansionsmittelkreislauf n-Butan mit einem Druck von 20 bis 30 bar vorhanden ist.

7. Motor nach einem der Ansprüche 5 oder 6, **dadurch gekennzeichnet, dass** die Ansteuerung durch eine Nockenwelle gebildet ist, die mit einem Einlass- sowie einem Auslassventil des Zylinders (2) zusammenwirkende Nocken aufweist, wobei die Nocken so auf der Nockenwelle angeordnet sind, dass bei jeder Aufwärtsbewegung des Kolbens in dem Zylinder (2) das Auslassventil öffnet und bei Annährung des Kolbens an eine oberste Position wieder schließt, und dann, wenn sich der Kolben in einer obersten Position befindet das Einlassventil öffnet.

8. Motor nach einem der Ansprüche 5 bis 7, **dadurch gekennzeichnet, dass** er einen Wärmetauscher (5) aufweist, der einen Wärmeübertrag zwischen den die Verbrennungsräume (1) verlassenden Abgasen und dem Expansionsmittel bewirkt.

9. Motor nach einem der Ansprüche 5 bis 8, **dadurch gekennzeichnet, dass** er einen Wärmetauscher (10) aufweist, der einen Wärmeübertrag zwischen einem zum Kühlen der Verbrennungsräume (1) eingesetzten Kühlmittel und dem Expansionsmittel bewirkt.

## Claims

1. Method for increasing the efficiency of a four-stroke internal combustion engine, use being made of the waste heat produced on combustion of the fuel in the combustion chambers in order to heat an expansion medium and therefore bring about expansion thereof, the expansion of the expansion medium is passed into at least one cylinder provided with a piston and the piston movement in the cylinder resulting from the expansion is used as additional engine propulsion force, whilst during every second stroke (OT) the expansion medium is introduced into the cylinder subject to the action thereof, **characterized in that** the expansion medium is constituted by a liquefied gas under high pressure.

2. Method according to claim 1, **characterized in that** use is made of n-butane under a pressure of 20 to 30 bar.

3. Method according to one of the claims 1 or 2, **characterized in that** the expansion medium travels in a cycle, where it is cooled after leaving the cylinder.

4. Method according to one of the preceding claims, **characterized in that** the transfer of the waste heat to the expansion medium takes place in at least two stages, where in a first stage the expansion medium is preheated by a coolant cooling the expansion chambers and in a second stage is further heated by the exhaust gases leaving the combustion chambers.

5. Four-stroke internal combustion engine with conventional combustion chambers (1) located in cylinders and at least one additional cylinder (2) provided with a piston subject to the action of an expansion medium in contact by means of at least one heat exchanger (5, 10) with the waste heat of the combustion taking place in the conventional combustion chambers (1) and whereby the piston movement acts on a common engine output shaft (crankshaft), the four-stroke internal combustion engine having a control set up so that on each occasion when the piston in the cylinder (20 is in an upper position introduces expansion medium into said cylinder (2), **characterized in that** it has an expansion medium cycle with a liquefied gas under high pressure therein.

6. Engine according to claim 5, **characterized in that** n-butane with a pressure of 20 to 30 bar is present in the expansion medium cycle.

7. Engine according to one of the claims 5 or 6, **characterized in that** the control is formed by a camshaft, which has cams cooperating with an inlet and an outlet valve of cylinder (2), the cams being located on the camshaft in such a way that the outlet valve is opened during each upward movement of the piston in cylinder (2) and when the piston approaches its top position closes again and then, if the piston remains in its top position, opens the inlet valve.

8. Engine according to one of the claims 5 to 7, **characterized in that** it has a heat exchanger (5), which brings about a heat transfer between the waste gases leaving the combustion chambers (1) and the expansion medium.

9. Engine according to one of the claims 5 to 8, **characterized in that** it has a heat exchanger (10), which brings about a heat transfer between a coolant used for cooling the combustion chambers (1) and the expansion medium.

## Revendications

1. Procédé destiné à améliorer le rendement d'un moteur à combustion interne à quatre temps, dans lequel la chaleur produite lors de la combustion du carburant dans les chambres de combustion est utilisée pour réchauffer un fluide d'expansion et provoquer ainsi son expansion, dans lequel l'expansion du fluide d'expansion est transmise dans au moins un cylindre doté d'un piston et le mouvement du piston dans le cylindre, résultant de l'expansion, est utilisé comme forme motrice supplémentaire, dans lequel le fluide d'expansion est introduit tous les deux temps (PMH) dans le cylindre soumis à l'action du fluide d'expansion, **caractérisé en ce que** l'on utilise comme fluide d'expansion un gaz liquéfié placé sous haute pression.

2. Procédé selon la revendication 1, **caractérisé en ce que** l'on utilise du n-butane sous une pression de 20 à 30 bars.

3. Procédé selon l'une des revendications 1 et 2, **caractérisé en ce que** le fluide d'expansion est conduit dans un circuit dans lequel, après avoir quitté le cylindre, il est refroidi.

4. Procédé selon l'une des revendications précédentes, **caractérisé en ce que** le transfert de la chaleur produite au fluide d'expansion s'effectue au moins en deux étapes, dans lequel le fluide d'expansion est préchauffé dans une première étape par un fluide de refroidissement qui refroidit les chambres de combustion et est ensuite chauffé dans une seconde étape par les gaz d'échappement brûlants qui quittent les chambres de combustion.

5. Moteur à combustion interne à quatre temps, avec des chambres de combustion conventionnelles (1) placées dans des cylindres ainsi qu'au moins un cylindre supplémentaire (2), doté d'un piston et pouvant être soumis à l'action d'un fluide d'expansion par l'intermédiaire d'au moins un échangeur de chaleur (5, 10) se trouvant en contact avec la chaleur produite par la combustion se produisant dans les chambres de combustion conventionnelles (1), le mouvement de son piston agissant sur un arbre de sortie commun du moteur (vilebrequin), dans lequel le moteur à combustion interne à quatre temps possède une commande qui est conçue pour admettre du fluide d'expansion dans le cylindre (2) à chaque fois que le piston se trouve dans le cylindre (1) dans une position haute, **caractérisé en ce qu'**il possède un circuit de fluide d'expansion avec à l'intérieur un gaz liquéfié placé sous haute pression.

6. Moteur selon la revendication 5, **caractérisé en ce qu'**il existe dans le circuit de fluide d'expansion du n-butane sous une pression de 20 à 30 bars.

7. Moteur selon l'une des revendications 5 et 6, **caractérisé en ce que** la commande est formée d'un arbre à cames qui possède des cames interagissant avec une soupape d'admission et une soupape d'échappement du cylindre (2), dans lequel les cames sont disposées sur l'arbre à cames de manière à ouvrir la soupape d'échappement à chaque mouvement de montée du piston dans le cylindre (2) et à la refermer lorsque le piston se rapproche de sa position haute, puis à ouvrir la soupape d'admission lorsque le piston se trouve dans une position haute maximale.

8. Moteur selon l'une des revendications 5 à 7, **caractérisé en ce qu'**il possède un échangeur thermique (5) qui opère un transfert de chaleur entre les gaz d'échappement quittant les chambres de combustion (1) et le fluide d'expansion.

9. Moteur selon l'une des revendications 5 à 8, **caractérisé en ce qu'**il possède un échangeur thermique (10) qui opère un transfert de chaleur entre un fluide de refroidissement utilisé pour le refroidissement des chambres de combustion (1) et le fluide d'expansion.
